Europäisches Patentamt

European Patent Office

Office européen des brevets

(11) Publication number: **0 156 041**
**B1**

(12) EUROPEAN PATENT SPECIFICATION

(45) Date of publication of patent specification: **01.02.89**

(51) Int. Cl.⁴: **A 01 F 15/00**

(21) Application number: **84201718.8**

(22) Date of filing: **26.11.84**

(54) Roll baling machine.

(30) Priority: **29.11.83 US 556230**

(43) Date of publication of application:
**02.10.85 Bulletin 85/40**

(45) Publication of the grant of the patent:
**01.02.89 Bulletin 89/05**

(84) Designated Contracting States:
**DE FR GB**

(56) References cited:
**DE-B-2 443 838**
**US-A-3 901 007**
**US-A-4 035 999**
**US-A-4 386 493**

(73) Proprietor: **FORD NEW HOLLAND, INC. (a Delaware corp.)**
**500 Diller Avenue**
**New Holland Pennsylvania 17557 (US)**

(72) Inventor: **Henry, James W.**
**219, 8th Avenue North**
**Yorkton Saskatchewan S3N OW8 (CA)**

(74) Representative: **Vandenbroucke, Alberic T.J.**
**FORD NEW HOLLAND N.V. Leon Claeysstraat 3A**
**B-8210 Zedelgem (BE)**

Courier Press, Leamington Spa, England.

# Description

This invention relates generally to the type of roll baling machine that comprises an expandable bale forming chamber and is described in particular with reference to a roll baling machine that is capable of continuously forming roll bales of crop material while moving across a field without stopping to discharge such bales.

An example of this type of roll baling machine is disclosed in U.S-A-4,035,999, assigned to the same assignee as the present application. The disclosed machine includes a lower apron and a pair of upper aprons. The upper aprons cooperate with the lower apron to define front and rear bale forming chambers. While a completed roll bale is being wrapped with twine and discharged from the rear chamber, another bale is started in the front chamber. When the bale started in the front chamber reaches a predetermined size, it is transferred to the rear chamber where it is completed. This provides for continuous baling operation of the machine.

Such roll baling machines of the type having an expandable bale forming chamber normally have a base frame and a movable frame connected thereto for movement between a closed position for bale formation and an open position for bale discharge. Such machines also may have an arm assembly adjustably supported on the movable frame for movably supporting, at least in part, bale forming means which, preferably but not necessarily, are of the apron or belt type. Alternatively the bale forming means may be of the roller type such as shown e.g. in DE-A-24.43.838.

The arm assembly may be movable outwardly during formation of a roll bale in the bale forming chamber from an inward position assumed when the bale forming chamber is empty. Coil springs or other resilient means may be provided for normally urging the arm assembly toward the inward position.

A drawback of such machines is that, when the movable frame is pivoted upwardly for discharging a completed bale, the arm assembly tends to move towards its inward position with respect to the movable frame, whereby it might interfere, not only with the opening and closing of the rear frame, but also with the discharge of the bale from the bale forming chamber.

Other adjustable arm assemblies not supporting any movable bale forming means, are illustrated in US-A-4,386,493. Complicated actuator means and linkage means are provided for controlling the position of the movable frame relative to the base frame and of the arm assemblies relative to the movable frame when the movable frame is in the open, bale discharge position.

It is a general object of the present invention to overcome this and other drawbacks, and more specifically, it is the main object of the present invention to provide an improved roll baling machine of the type described, which is of simple design and wherein completed bales may be discharged smoothly from the bale forming chamber without any machine component tending to interfere therewith as well as with the opening and the subsequent closing of the movable frame for effecting said discharge.

According to the invention, a roll baling machine of the type having an expandable bale forming chamber is provided and which comprises:
- a base frame;
- a movable frame connected to the base frame for movement between a closed, bale forming position and an open, bale discharge position;
- actuator means pivotally connected at one end to the base frame and operatively connected at the other end to the movable frame for moving said movable frame from its closed position to its open position and vice versa;
- expandable bale forming means defining, at least in part, said bale forming chamber;
an arm assembly adjustably supported on the movable frame;
- resilient means extending between the movable frame and the arm assembly for, when the bale forming chamber is empty, urging the arm assembly toward an inward position; said arm assembly being movable outwardly opposite to the action of said resilient means during formation of a roll bale in the bale forming chamber; and
- control means operatively coupled to the arm assembly and having a lost-motion connection; said control means being operable, on the one hand, to allow the arm assembly to move between the inward and outward positions when the movable frame is in the closed position and, on the other hand, to restrain the arm assembly to the outward position when the movable frame is in the open position for discharging a bale from the bale forming chamber.

This baler is characterized according to the invention in that:
- the expandable bale forming means are movably supported, at least in part, through the intermediary of the arm assembly on the movable frame; and
- the actuator means is operatively connected to the movable frame via a frame member to which said actuator means is pivotally coupled; said frame member itself being part of the control means including the lost-motion connection and being pivotally mounted, at a location spaced from the pivotal connection to the actuator means, on said movable frame and the arrangement being such that:
. upon extension of the actuator means from a retracted position, the frame member pivots until it abuts against a stop on the movable frame, whereafter further extension of the actuator means results in movement of the movable frame from its closed position to its open position, and
. upon said pivotal movement of the frame member till abutment against said stop, the lost-motion connection is made inoperative in the sense that the arm assembly under this condition, is restrained to its outward position.

Preferably but not necessarily, the bale forming means are in the form of expandable apron means movably supported at least in part on guide means provided on the arm assembly. Alternatively, the bale forming means may be of the roller type and be rotatably mounted on the arm assembly.

In a preferred embodiment the control means including the lost-motion connection comprises a link member extending between the frame member and the arm assembly; said link member being pivotally coupled at one end to either the frame member or the arm assembly and being coupled at its other end, via said lost-motion connection to either the arm assembly or the frame member in a manner to permit said movement of the arm assembly between said inward and outward positions when the movable frame is in the closed position. The lost-motion connection may consist of said link member having an elongated slot formed therein for slidably receiving a pin mounted on the arm assembly.

The invention is equally applicable on the commonly known single chamber roll baling machines and on the continuous roll baling machines such as those of the type having first and second bale forming chambers.

A continuous roll baling machine embodying the present invention will now be described in greater detail by way of example with reference to the accompanying drawings, in which:

Fig. 1 is a somewhat schematic side elevation view of a roll baling machine according to the present invention at the initiation of the baling operation;

Fig. 2 is a view similar to Fig. 1 when a bale of predetermined size has been formed in the front chamber;

Fig. 3 is a view similar to Fig. 1 when the bale is ready to be transferred from the front chamber to the rear chamber;

Fig. 4 is a view similar to Fig. 1 immediately after the bale has been transferred from the front chamber to the rear chamber;

Fig. 5 is a view similar to Fig. 1 during completion of the bale in the rear chamber;

Fig. 6 is a view similar to Fig. 1 when the bale has been completed in the rear chamber and another bale is being started in the front chamber;

Fig. 7 is a view similar to Fig. 1 when the completed bale in the rear chamber is being wrapped with twine as the bale in the front chamber is being formed;

Fig. 8 is a view similar to Fig. 1 during discharge of the completed bale from the rear chamber; and

Figs. 9-11 are enlarged views illustrating the control linkage of the present invention taken at different stages of bale formation.

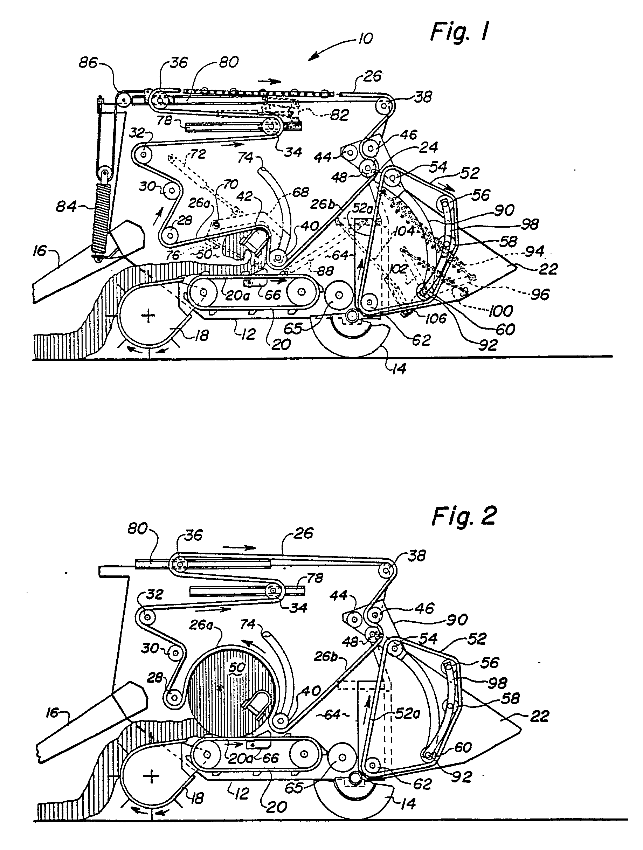

In the following description and claims, right, left, front and rear references are determined by standing at the rear of the machine and facing in the direction of forward travel, which is to the left as seen in Figure 1. Also, in the following description and claims, it is to be understood that such terms as "front", "rear", "right", "left", "upper", "lower", "first", "second", "third", etc. are words of convenience and are not to be construed as limiting terms.

Referring generally to Fig. 1, a roll baling machine 10 according to the present invention includes a base frame 12 supported at its sides by wheels 14 and adapted for connection to a tractor (not shown) by a tongue 16. A pickup device 18 and a lower apron 20 are supported on the base frame 12. The lower apron 20 is preferably of the type disclosed in US-A-3,901,007, incorporated herein by reference. A rear frame 22 is pivotally connected at 24 to the base frame 12.

A first upper bale forming apron 26 is movably supported on guide members 28, 30, 32, 34, 36, 38, 40, 42 carried on the opposite sides of the base frame 12 and on guide members 44, 46, 48 carried at the opposite sides of the rear frame 22. The upper course 20a of the lower apron 20 cooperates with a course 26a of the first upper apron 26 extending between the guide members 28 and 40 to define an expandable front bale chamber 50.

A second upper bale forming apron 52 is movably supported on guide members 54, 56, 58, 60, 62 carried at the opposite sides of the rear frame 22. A course 52a of the second upper apron 52 extending between the guide members 54 and 62 cooperates with a course 26b of the first upper apron 26 extending between the guide members 40 and 48 to define an expandable rear bale chamber 64. The rear part of the lower apron 20 and a roller 65 are disposed at the bottom of the rear bale chamber 64. The first and second upper aprons 26 and 52 are preferably formed of a pair of endless link-type chains connected at spaced intervals by transverse bars or slats such as the upper apron disclosed in U.S.-A-3,901,007. The guide members 42 are of the cam type also disclosed in this patent. Advantageously, the front and rear bale chambers 50, 64, when in the empty condition, are generally triangular in shape with the front bale chamber 50 being oriented generally horizontally and with the rear bale chamber 64 extending in a generally upright orientation.

A series of ramps 66 are carried on the base frame 12 and extend transversely between the opposite sides thereof. These ramps 66 are pivotally movable and are similar to those disclosed in U.S.-A-4,035,999, incorporated herein by reference, and designated therein by the numeral "282". The guide members 40 are carried by a pair of arms 68 which are pivotally movable on shafts 70 secured to the base frame 12. Hydraulic cylinders 72 control the pivotal movement of the arms 68, and slots 74 formed in the sides of the base frame 12 limit and guide the upward and downward movement of the guide members 40. An actuator mechanism 76 interconnects the arms 68 and the ramps 66. The guide members 34 and 36 are movable fore and aft in channels 78 and 80, respectively, mounted on the base frame 12. Idler mechanisms 82 control the movement of the guide members 34 in the channel 78. Springs 84 are connected to the guide members 36 by cables or chains 86 to urge the guide members 36 forward in the channels 80 to thus provide tension in the apron 26.

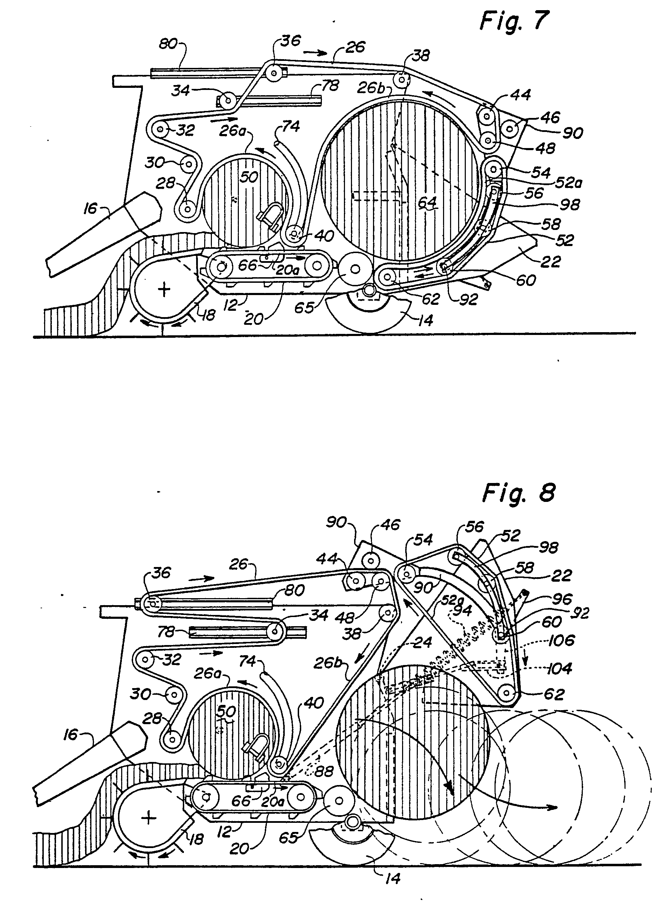

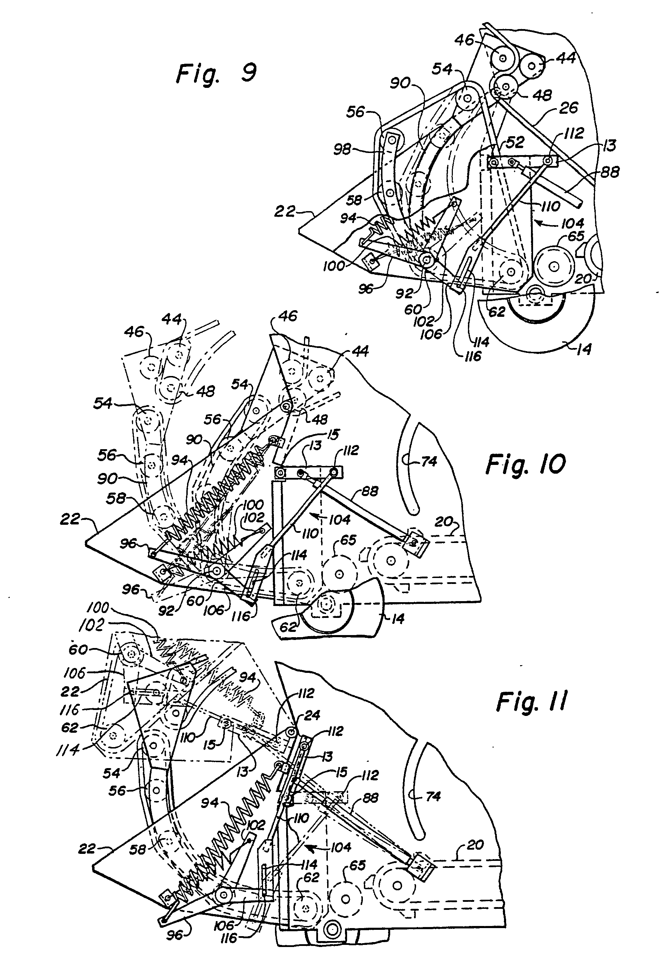

Hydraulic cylinders 88 are connected between the base frame 12 and frame members 13 (Figures 9-11) of the rear frame 22 for moving the rear frame 22 between the closed position shown in Fig. 1 and the open position shown in Fig. 8. The guide members 44, 46, 48, 54 and 60 are carried on an arm assembly 90 that is pivoted at 92 on the rear frame 22. Springs 94 are connected to lever portions 96 of the arm assembly 90 to urge the arm assembly 90 in a counterclockwise direction about the pivot 92 when viewed in Fig. 1. The guide members 56 and 58 are carried on another arm assembly 98 that is also pivoted at 92 on the rear frame 22. Springs 100 are connected to lever portions 102 of the arm assembly 98 to urge the arm assembly 98 in a clockwise direction about the pivot 92 when viewed in Fig. 1. Springs 94 are stronger than springs 100. A control linkage 104 is connected between the rear frame 22 and other lever portions 106 of the arm assembly 90 to pull the arm assembly 90 in a clockwise direction against the springs 94 when viewed in Fig. 1, during movement of the rear frame 22 to the open position of Fig. 8.

In operation and as the machine 10 is pulled across a field by a tractor, the pickup device 18 delivers crop material into the front bale chamber 50 where it is coiled by the cooperating movement of the lower apron 20 and the upper apron 26 (as indicated in Fig. 1) to start the core of a roll bale. During this stage of the operation, the guide members 40 are in their lowermost position in the slots 74 and the ramps 66 are pivoted upwardly to extend through and above the upper course 20a of the lower apron 20 so that the upper apron 26 and the ramps 66 together close the rear of the front bale chamber 50 and thereby effectively prevent material from entering the rear bale chamber 64. As the bale increases in diameter, as shown in Fig. 2, the guide members 36 move rearwardly in the channels 80 against the force of the spring 84. This allows the course 26a of the apron 26 that extends between the guide members 28 and 40 to expand around the bale.

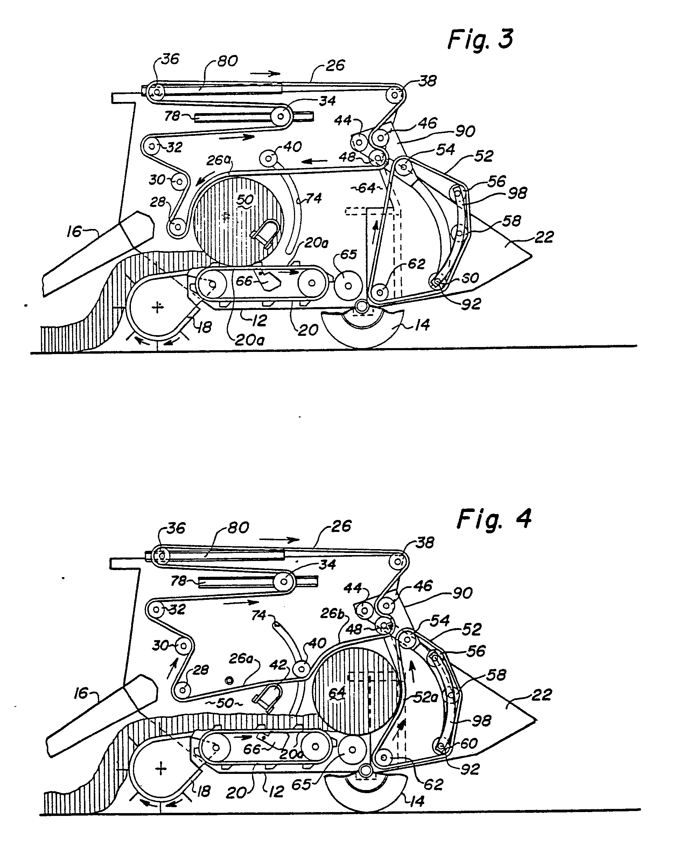

When the bale reaches a predetermined diameter, the guide members 40 are moved upwardly in the slots 74, as shown in Fig. 3, by contracting the hydraulic cylinders 72 in order to pivot the arms 68 upwardly on the shafts 70. The guide members 36 are moved forwardly in the channels 80 by the springs 84 to take up the slack in the apron 26 resulting from the movement of the guide members 40 to their uppermost positions in the slots 74. The actuator mechanism 76 connecting the arms 68 and the ramps 66 causes downward pivoting movement of the ramps 66 simultaneously with the upward movement of the guide members 40. The ramps 66 are pivoted downwardly below the upper course 20a of the lower apron 20. These movements of the guide members 40 and the ramps 66 open up the rear of the front bale chamber 50 and the front of the rear bale chamber 64.

The bale is then transferred by the lower apron 20 into the rear bale chamber 64, as shown in Fig. 4, where it rests primarily on the roller 65. To assist the transfer of the bale, the apron 26 is either stopped or driven in reverse direction. Next, the guide members 40 are moved downwardly in the slots 74 to an intermediate position by extending the hydraulic cylinders 72 in order to pivot the arms 68 downwardly about the shafts 70. In this intermediate position of the guide members 40, the course 26a of the apron 26 that extends between the guide members 28 and 40 is supported slightly by the guide members 42. At the same time, the course 26b of the apron 26 that extends between the guide members 40 and 48 expands around a forward upper portion of the bale to maintain the bale in the rear bale chamber 64. The course 52a of the apron 52 that extends between the guide members 54 and 62 expands slightly around the rear of the bale. This expansion of the apron course 52a is permitted by forward pivoting movement of the arm assembly 98 on the pivot 92. The actuator mechanism 76 connecting the arms 68 and the ramps 66 causes some upward pivoting movement of the ramps 66 simultaneously with the downward movement of the guide members 40 to their intermediate positions. However, the ramps 66 are not pivoted upwardly far enough to extend above the upper course 20a of the lower apron 20. Therefore, neither the ramps 66 nor the apron 26 prevent or impede material from entering tbe rear bale chamber 64. Material is delivered through the front bale chamber 50 into the rear bale chamber 64 by the lower apron 20, as seen in Fig. 4, to complete the bale.

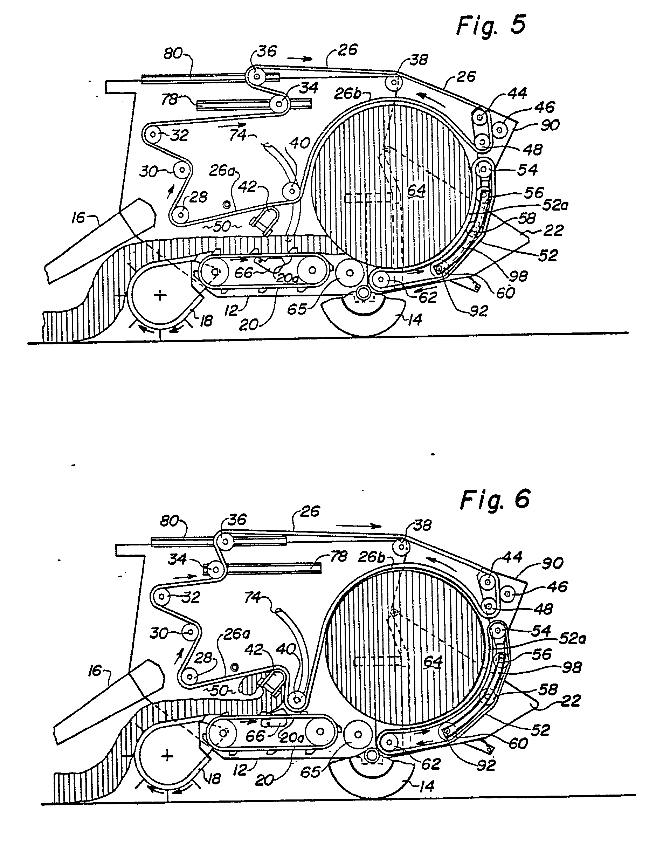

The bale increases in diameter, as shown in Fig. 5, thereby expanding the course 26b of the apron 26 that extends between the guide members 40 and 48, and also expanding the course 52a of the apron 52 that extends between the guide members 54 and 62. The guide members 36 move rearwardly in the channels 80 to permit the expansion of the apron course 26b. The arm assemblies 90 and 98 pivot rearwardly about pivot 92 during expansion of apron course 26b and expansion of apron course 52a.

When the bale reaches the desired diameter, the guide members 40 are moved downwardly in the slots 74, as shown in Fig. 6, by further extending the hydraulic cylinders 72 to pivot the arms 68 downwardly on the shafts 70. The idler mechanisms 82 allow the guide members 34 to move forwardly in the channels 78 to relax some of the tension in the apron 26. The guide members 40 move to their lowermost position in slots 74 and the actuator mechanism 76 connected between the arms 68 and ramps 66 simultaneously causes the ramps 66 to pivot upwardly above the upper course 20a of the lower apron 20. The apron 26 and the ramps 66 close the rear of the front bale chamber 50 and thus cut off the delivery of material to the rear bale chamber 64. The core of another roll bale is then started in the front bale chamber 50.

While the second bale increases in diameter in the front bale chamber 50, as shown in Fig. 7, the completed bale which is still disposed in the rear bale chamber 64 is wrapped with twine or other suitable material in a conventional manner. When the twine wrapping is completed, the hydraulic cylinders 88 are extended to move the rear frame 22 upwardly to the open position of Fig. 8. The idler mechanisms 82 move the guide members 34 rearwardly in the channels 78 to help take up some of the slack in the apron 26. The control linkage 104 acts against the springs 94 to maintain the arm assembly 90 in a position where it does not interfere with the upward opening movement of the rear frame 22. The completed bale is discharged from the machine 10 in the manner indicated in Fig. 8 while that the second bale continues to ·be formed in the front bale chamber 50. After discharging the completed bale, the hydraulic cylinders 88 are contracted to move the rear frame 22 downwardly to its closed position, and the parts of the machine 10 are once again located as shown in Fig. 2 so that the baling operation may continue without interruption.

According to the present invention, the control linkage 104 as best shown in Figs. 9-11 includes link members 110 having a pivotal connection 112 at one of their ends with frame members 13, which themselves pivotally are connected at 15 to the rear frame 22. The other ends of the link members 110 have elongated slots 114 formed therein which slidably receive pins 116 mounted on the lever portions 106 of the arm assembly 90. The hydraulic cylinders 88, which at one end are pivotally supported on the base unit 12, are pivotally coupled at their outer ends to the frame members 13 intermediate the opposite ends thereof, i.e. intermediate the pivots 15 and 112.

During the stages of bale formation illustrated in Figs. 1-4, the arm assembly 90 remains in the forward position shown in Fig. 9 and the pins 116 are disposed at the outer ends of the slots 114, thus preventing the springs 94 to pivot the arm assemblies 90 even further forward beyond the position shown in Figure 1. During the stage of bale formation illustrated in Fig. 5 where the bale is being completed in the rear bale chamber 64, the arm assembly 90 is rotated rearwardly in a counterclockwise direction and opposite to the spring force of the springs 94 about pivot 92 as seen in Fig. 10 to a rearward position. This rotation of the arm assembly 90 causes the pins 116 to slide upwardly in the slots 114 toward the inner ends of the slots 114 without resulting in any movement of the link members 110, thereby constituting a lost-motion connection between the arm assembly 90 and the link members 110.

For raising the rear frame 22 as illustrated in Fig. 8 to discharge a completed bale from the rear chamber 64, the frame members 13 first are pivoted at 15 in a counterclockwise direction as viewed in Fig. 8 and until they abut against stops (not shown in the drawings) on the rear frame 22 by extension of the hydraulic cylinders 88 to an intermediate position. Thereafter, further extension of the hydraulic cylinders 88 effectively results in a pivoting of the rear frame 22 about the pivots 24 on the base frame 12. The pivoting of the frame members 13 causes upward movement of the link members 110 until the pins 116 reach the outer ends of the slots 114. The arm assembly 90 is then prevented from rotating forward about the pivot 92 from its rearwardmost position as shown in Figs. 6 and 7 and is held in this rearwardmost position by the control linkage 104, thereby preventing the arm assembly 90 from interfering with the upward opening movement of the rear frame 22 while discharging a bale from the rear bale chamber 64.

If the control linkages 104 were not used, the springs 94 would tend to urge the arm assembly 90 forwardly where it might interfere not only with the raising and lowering of the rear frame 22, but also with the discharge of a bale from the rear bale chamber 64.

It is further also remarked that advantageously the arm assembly 90 is disposed in a generally upright orientation when the rear frame 22 is in its closed position and the second bale chamber 64 is empty. The arm assembly 90 further also is advantageously pivotally mounted on the rear frame generally at its lower end.

In the preferred embodiment of the invention, the movements of the various parts of the roll baling machine 10 would be controlled automatically by using conventional electronic equipment. However, they may also be controlled mechanically by an operator with the aid of visual indicators.

From what precedes, it will be seen that a roll baling machine of the type having an expandable bale forming chamber is provided, wherein completed bales may be discharged smoothly from the bale forming chamber without any machine component tending to interfere therewith as well as with the opening and the subsequent closing of the movable frame for effecting said discharge.

Aspects of the roll baling machine described herein are claimed in the co-pending patent application EP-A-0.148.519.

**Claims**

1. A roll baling machine (10) of the type having an expandable bale forming chamber (64) and comprising:
   - a base frame (12);
   - a movable frame (22) connected to the base frame (12) for movement between a closed, bale forming position and an open, bale discharge position;
   - actuator means (88) pivotally connected at one end to the base frame (12) and operatively connected at the other end to the movable frame (22) for moving said movable frame (22) from its closed position to its open position and vice versa;

- expandable bale forming means (52) defining, at least in part, said bale forming chamber (64);

- an arm assembly (90) adjustably supported on the movable frame (22);

- resilient means (94) extending between the movable frame (22) and the arm assembly (90) for, when the bale forming chamber (64) is empty, urging the arm assembly (90) toward an inward position; said arm assembly (90) being movable outwardly opposite to the action of said resilient means (94) during formation of a roll bale in the bale forming chamber (64); and

- control means (104) operatively coupled to the arm assembly (90) and having a lost-motion connection (114-116); said control means (104) being operable, on the one hand, to allow the arm assembly (90) to move between the inward and outward positions when the movable frame (22) is in the closed position and, on the other hand, to restrain the arm assembly (90) to the outward position when the movable frame (22) is in the open position for discharging a bale from the bale forming chamber (64),

characterized in that:

- the expandable bale forming means (52) are movably supported, at least in part, through the intermediary of the arm assembly (90) on the movable frame (22); and

- the actuator means (88) is operatively connected to the movable frame (22) via a frame member (13) to which said actuator means (88) is pivotally coupled; said frame member (13) itself being part of the control means (104) including the lost-motion connection (114-116) and being pivotally mounted, at a location spaced from the pivotal connection to the actuator means (88), on said movable frame (22) and the arrangement being such that:

- upon extension of the actuator means (88) from a retracted position, the frame member (13) pivots until it abuts against a stop on the movable frame (22), whereafter further extension of the actuator means (88) results in movement of the movable frame (22) from its closed position to its open position, and

- upon said pivotal movement of the frame member (13) till abutment against said stop, the lost-motion connection (114-116) is made inoperative in the sense that the arm assembly (90), under this condition, is restrained to its outward position.

2. A roll baling machine according to claim 1, characterized in that the bale forming means (52) are in the form of expandable apron means movably supported at least in part on guide means (54) provided on the arm assembly (90).

3. A roll baling machine according to claim 1 or 2 characterized in that, with the movable frame (22) in its closed position and with the bale forming chamber (64) empty, the arm assembly (90) is disposed in a generally upright orientation and is pivotally mounted on the movable frame (22) adjacent its lower end.

4. A roll baling machine according to any of preceding claims characterized in that:

- the control means (104) including the lost-motion connection (114-116) comprises a link member (110) extending between the frame member (13) and the arm assembly (90); said link member (110) being pivotally coupled at one end to either the frame member (13) or the arm assembly (90) and being coupled at its other end, via said lost-motion connection (114-116), to either the arm assembly (90) or the frame member (13) in a manner to permit said movement of the arm assembly (90) between said inward and outward positions when the movable frame (22) is in the closed position.

5. A roll baling machine according to claim 4 characterized in that: the lost-motion connection (114-116) consists of said link member (110) having an elongated slot (114) formed therein for slidably receiving a pin (116) mounted on the arm assembly (90).

6. A roll baling machine according to any of the preceding claims characterized in that it also comprises:

- a further arm assembly (98) for additionally supporting the bale forming means (52) and which is adjustably supported on the movable frame (22) and is movable inwardly during formation of a roll bale in the bale forming chamber (64) from an outward position assumed when the bale forming chamber (64) is empty; and

- further resilient means (100) associated with the further arm assembly (98) for normally urging the latter toward the outward position.

7. A roll baling machine according to any of the preceding claims and being of the continuous type wherein the bale forming means comprise:

- lower apron means (20);

- first upper apron means (26) cooperating with the lower apron means (20) to define a first bale forming chamber (50); and

- second upper apron means (52) cooperating with the first upper apron means (26) to define a second bale forming chamber (64); and

characterized in that:

- the arm assembly (90) movably supports at least in part both the first and second upper apron means (26, 52).

**Patentansprüche**

1. Rundballen-Formmaschine (10) vom Typ mit einer ausdehnbaren Rundballen-Formkammer (64), wobei die Rundballen-Formmaschine weiterhin folgende Teile aufweist:

- einen Hauptrahmen (12),

- einen mit dem Hauptrahmen (12) verbundenen beweglichen Rahmen (22), der zwischen einer geschlossenen, den Rundballen formenden Position und einer offenen Rundballen-Auswurfposition beweglich ist,

- Betätigungseinrichtungen (88), die schwenkbar an einem Ende mit dem Hauptrahmen (12) und betriebsmäßig am anderen Ende mit dem beweglichen Rahmen (22) verbunden sind, um den beweglichen Rahmen (22) aus seiner geschlossenen Position in seine offene Position und umgekehrt zu bewegen,

- ausdehnbare Rundballen-Formeinrichtungen (52), die zumindestens teilweise die Rundballenformkammer (64) bilden,

- eine Armbaugruppe (90), die einstellbar auf dem beweglichen Rahmen (22) gehalten ist,

- elastische Einrichtungen (94), die sich zwischen dem beweglichen Rahmen (22) und der Armbaugruppe (90) erstrecken und die Armbaugruppe (90) auf eine nach innen gerichtete Position drücken, wenn die Rundballenformkammer (64) leer ist, wobei die Armbaugruppe (90) gegen die Wirkung der elastischen Einrichtungen (94) während der Bildung eines Rundballens in der Rundballenformkammer (64) nach außen beweglich ist, und

- Steuereinrichtungen (104), die betriebsmäßig mit der Armbaugruppe (90) verbunden sind und eine Totgangverbindung (114-116) aufweisen, wobei die Steuereinrichtungen (104) so betätigbar sind, daß sie es einerseits der Armbaugruppe (90) ermöglichen, sich zwischen den nach innen und nach außen gerichteten Positionen zu bewegen, wenn sich der bewegliche Rahmen (22) in der geschlossenen Stellung befindet, und daß sie andererseits die Armbaugruppe (90) in Richtung auf die nach außen gerichtete Position festlegen, wenn sich der bewegliche Rahmen (22) in der offenen Position zum Auswerfen eines Rundballens aus der Rundballenformkammer (64) befindet,

dadurch gekennzeichnet, daß

- die ausdehnbaren Rundballen-Formeinrichtungen (52) zumindestens teilweise über die Armbaugruppe (90) auf dem beweglichen Rahmen (22) gehalten sind und daß

- die Betätigungseinrichtungen (88) betriebsmäßig mit dem beweglichen Rahmen (22) über ein Rahmenbauteil (13) verbunden sind, mit dem die Betätigungseinrichtungen (88) schwenkbar gekoppelt sind, wobei das Rahmenteil (13) selbst einen Teil der die Totgangverbindung (114-116) einschließenden Steuereinrichtungen (104) bildet und schwenkbar an einer Stelle, die mit Abstand von der Schwenkverbindung mit den Betätigungseinrichtungen (88) angeordnet ist, an dem beweglichen Rahmen (22) befestigt ist, wobei die Anordnung derart ist, daß

- beim Ausfahren der Betätigungseinrichtungen (88) aus einer zurückgezogenen Position das Rahmenteil (13) verschwenkt wird, bis es gegen einen Anschlag an dem beweglichen Rahmen (22) anstößt, worauf eine weitere Ausfahrbewegung der Betätigungseinrichtungen (88) zu einer Bewegung des beweglichen Rahmens (22) aus seiner geschlossenen Position in seine offene Position führt, und daß

- bei der Schwenkbewegung des Rahmenteils (13) bis zum Anstoßen gegen den Anschlag die Totgangverbindung (114-116) in dem Sinn unwirksam gemacht wird, daß die Armgruppe (90) in diesem Zustand in ihrer nach außen gerichteten Position festgehalten wird.

2. Rundballen-Formmaschine nach Anspruch 1, dadurch gekennzeichnet, daß die Rundballen-Formeinrichtungen (52) die Form von ausdehnbaren Förderbandeinrichtungen aufweisen, die zumindestens teilweise auf Führungseinrichtungen (54) beweglich gehalten sind, die auf der Armbaugruppe (90) vorgesehen sind.

3. Rundballen-Formmaschine nach Anspruch 1 oder 2, dadurch gekennzeichnet, daß wenn sich der bewegliche Rahmen (22) in seiner geschlossenen Position befindet und wenn die Rundballenformkammer (64) leer ist, die Armbaugruppe (90) in einer allgemein senkrecht stehenden Ausrichtung angeordnet und schwenkbar an dem beweglichen Rahmen (22) benachbart zu dessen unterem Ende befestigt ist.

4. Rundballen-Formmaschine nach einem der vorhergehenden Ansprüche, dadurch gekennzeichnet, daß die die Totgangverbindung (114-116) einschließenden Steuereinrichtungen (104) ein Verbindungsgliedteil (110) umfassen, das sich zwischen dem Rahmenteil (13) und der Armbaugruppe (90) erstreckt, daß das Verbindungsgliedteil (110) schwenkbar an einem Ende entweder mit dem Rahmenteil (13) oder der Armbaugruppe (90) verbunden ist, während es am anderen Ende über die Totgangverbindung (114-116) entweder mit der Armbaugruppe (90) oder dem Rahmenbauteil (13) in einer derartigen Weise gekoppelt ist, daß die Bewegung der Armbaugruppe (90) zwischen den nach innen und nach außen gerichteten Positionen ermöglicht wird, wenn sich der bewegliche Rahmen (22) in der geschlossenen Position befindet.

5. Rundballen-Formmaschine nach Anspruch 4, dadurch gekennzeichnet, daß die Totgangverbindung (114-116) sich dadurch ergibt, daß das Verbindungsgliedteil (110) einen darin ausgebildeten langgestreckten Schlitz (114) aufweist, der zur verschiebbaren Aufnahme eines Bolzens (116) ausgebildet ist, der auf der Armbaugruppe (90) befestigt ist.

6. Rundballen-Formmaschine nach einem der vorhergehenden Ansprüche, dadurch gekennzeichnet, daß sie weiterhin folgende Teile aufweist:

- eine weitere Armbaugruppe (98) zur zusätzlichen Halterung der Rundballen-Formeinrichtungen (52), die einstellbar auf dem beweglichen Rahmen (22) gehalten ist und die während der Bildung eines Rundballens in der Rundballenformkammer (64) ausgehend von einer nach außen gerichteten Position, die die weitere Armbaugruppe (98) bei leerer Rundballenformkammer (64) einnimmt, nach nach innen hin beweglich ist, und

- weitere elastische Einrichtungen (100), die der weiteren Armbaugruppe (98) zugeordnet sind, um normalerweise die letztere in Richtung auf die außenliegende Position zu drücken.

7. Rundballen-Formmaschine nach einem der vorhergehenden Ansprüche, die vom kontinuierlichen Typ ist, worin die Rundballen-Formeinrichtungen folgende Teile umfassen:

- untere Förderbandeinrichtungen (20),

- erste obere Förderbandeinrichtungen (26), die mit den unteren Förderbandeinrichtungen (20) zusammenwirken, um eine erste Rundballenformkammer (50) zu bilden, und zweite obere Förderbandeinrichtungen (52), die mit den ersten oberen
Förderbandeinrichtungen (26) zusammenwirken,
um eine zweite Rundballenformkammer (64) zu
bilden,

dadurch gekennzeichnet, daß

- die Armbaugruppe (90) in beweglicher Weise
zumindest teilweise sowohl die ersten als auch
die zweiten oberen Förderbandeinrichtungen (26,
52) haltert.

**Revendications**

1. Machine de ramassage-pressage de rouleaux
de fourrage (10) du type équipé d'une chambre de
pressage de balles extensible (64), et comportant:
- un châssis de base (12);
- un châssis mobile (22) monté sur le châssis de
base (12) en vue d'un déplacement entre une
position fermée de pressage de balles et une
position ouverte d'évacuation de balles;
- un moyen d'actionnement (88) accouplé à
pivotement avec le châssis de base (12), au niveau
de l'une de ses extrémités, et d'une manière
fonctionnelle avec le châssis mobile (22), au
niveau de son autre extrémité, en vue de déplacer
ledit châssis mobile (22) de sa position fermée
dans sa position ouverte et vice versa;
- des moyens de pressage de balles extensibles
(52) qui définissent, au moins en partie, ladite
chambre de pressage de balles (64);
- un ensemble de bras (90) supporté d'une
manière réglable sur le châssis mobile (22);
- un moyen élastique (94) qui s'étend entre le
châssis mobile (22) et l'ensemble de bras (90)
pour, lorsque la chambre de pressage de balles
(64) est vide, solliciter l'ensemble de bras (90) en
direction d'une position intérieure; ledit ensemble
de bras (90) pouvant se déplacer vers l'extérieur à
l'encontre de l'action exercée par ledit moyen
élastique (94) pendant le pressage d'une balle
cylindrique dana la chambre de pressage de balles
(64); et
- un moyen de commande (104) accouplé d'une
manière fonctionnelle avec l'ensemble de bras
(90) et comprenant un accouplement à course
morte (114-116); ledit moyen de commande (104)
étant apte à opérer pour, d'une part, permettre à
l'ensemble de bras (90) de se déplacer entre les
positions intérieure et extérieure, lorsque le châssis mobile (22) est dans la position fermée, et,
d'autre part, pour retenir l'ensemble de bras (90)
dans sa position extérieure, lorsque le châssis
mobile (22) est dans la position ouverte en vue
d'évacuer une balle hors de la chambre de pressage de balles (64),

caractérisée en ce que:
- les moyens de presaage de balles extensibles
(52) sont supportés d'une manière mobile, au
moins en partie, par l'intermédiaire de l'ensemble
de bras (90) monté sur le châssis mobile (22); et
- le moyen d'actionnement (88) est relié d'une
manière fonctionnelle au châssis mobile (22) par
l'intermédiaire d'un élément d'armature (13) avec lequel ledit moyen d'actionnement (88) est accouplé à pivotement; ledit élément d'armature (13)
faisant lui-même partie du moyen de commande
(104) qui comprend l'accouplement à course
morte (114-116) et étant monté pivotant, en un
point situé à une certaine distance de l'accouplement pivotant avec le moyen d'actionnement (88),
sur ledit châssis mobile (22), l'agencement étant
tel que:
- lors d'une extension du moyen d'actionnement
(88) à partir d'une position rétractée, l'élément
d'armature (13) pivote jusqu'à ce qu'il vienne en
butée contre un organe d'arrêt disposé sur le
châssis mobile (22), après quoi, une extension
supplémentaire du moyen d'actionnement (88)
entraîne un déplacement du châssis mobile (22) de
sa position fermée dans sa position ouverte, et
- lors dudit mouvement pivotant de l'élément
d'armature (13) jusqu'en butée contre ledit organe
d'arrêt, l'accouplement à course morte (114-116)
est rendu inopérant, en ce sens que l'ensemble de
bras (90) est, dans ce cas, retenu dans sa position
extérieure.

2. Machine de ramassage-pressage de rouleaux
de fourrage selon la revendication 1, caractérisée
en ce que les moyens de pressage de balles (52) se
présentent sous la forme de moyens formant tapis
extensibles supportés d'une manière mobile, au
moins en partie, sur des moyens de guidage (54)
prévus sur l'ensemble de bras (90).

3. Machine de ramassage-pressage de rouleaux
de fourrage selon la revendication 1 ou 2, caractérisée en ce que, lorsque le châssis mobile (22) se
trouve dans sa position fermée et que la chambre
de pressage de balles (64) est vide, l'ensemble de
bras (90) est disposé suivant une orientation
sensiblement verticale, et monté à pivotement sur
le châssis mobile (22) à proximité de son extrémité
inférieure.

4. Machine de ramassage-pressage de rouleaux
de fourrage selon l'une quelconque des revendications précédentes, caractérisée en ce que:
- le moyen de commande (104) qui comprend
l'accouplement à course morte (114-116) comporte un organe de liaison (110) qui s'étend entre
l'élément d'armature (13) et l'ensemble de bras
(90); ledit organe de liaison (110) étant, au niveau
de l'une de ses extrémités, accouplé à pivotement
avec l'élément d'armature (13) ou avec l'ensemble
de bras (90) et, au niveau de son autre extrémité,
accouplé, par l'intermédiaire dudit accouplement
à course morte (114-116), avec l'ensemble de bras
(90) ou avec l'élément d'armature (13), de manière
à permettre ledit déplacement de l'ensemble de
bras (90) entre lesdites positions intérieure et
extérieure, lorsque le châssis mobile (22) est dans
la position fermée.

5. Machine de ramassage-pressage de rouleaux
de fourrage selon la revendication 4, caractérisée
en ce que l'accouplement à course morte (114-116)
est constitué par ledit organe de liaison (110) qui
comporte, ménagée en lui, une fente allongée
(114) destinée à recevoir d'une manière coulissante une broche (116) montée sur l'ensemble de
bras (90).

6. Machine de ramassage-pressage de rouleaux de fourrage selon l'une quelconque des revendications précédentes, caractérisée en ce qu'elle comporte également:

- un second ensemble de bras (98) destiné à fournir un support supplémentaire aux moyens de pressage de balles (52), qui est supporté d'une manière réglable sur le châssis mobile (22) et apte à se déplacer vers l'intérieur pendant le pressage d'une balle cylindrique dans la chambre de pressage de balles (64), à partir d'une position extérieure adoptée lorsque la chambre de pressage de balles (64) est vide; et

- un second moyen élastique (100) associé au second ensemble de bras (98) pour normalement solliciter ce dernier vers la position extérieure.

7. Machine de ramassage-pressage de rouleaux de fourrage selon l'une quelconque des revendications précédentes, et du type continu dans lequel les moyens de pressage de balles comportent:

- un moyen formant tapis inférieur (20);

- un premier moyen formant tapis supérieur (26) qui coopère avec le moyen formant tapis inférieur (20) pour définir une première chambre de pressage de balles (50); et

- un second moyen formant tapis supérieur (52) qui coopère avec le premier moyen formant tapis supérieur (26) pour définir une seconde chambre de pressage de balles (64); et

caractérisée en ce que:

- l'ensemble de bras (90) supporte d'une manière mobile, au moins en partie, les deux premier et second moyens formant tapis supérieurs (26, 52).

9

Fig. 1

Fig. 2

Fig. 3

Fig. 4

*Fig. 5*

*Fig. 6*

3

Fig. 7

Fig. 8

Fig. 9

Fig. 10

Fig. 11